# EUROPEAN PATENT SPECIFICATION

(11) **EP 4 223 797 B1**
(45) Date of publication and mention of the grant of the patent: **02.07.2025**
(21) Application number: 21875353.1
(22) Date of filing: 22.09.2021
(51) Int. Cl.: C08F 8/48, C08J 3/12, C08L 33/00, C08L 53/02, C08F 212/08, C08J 3/18, C08F 8/32, C08L 35/06, C08L 55/02

(54) **MALEIMIDE COPOLYMER**
MALEIMIDCOPOLYMER
COPOLYMÈRE À BASE DE MALÉIMIDE

(30) Priority: 29.09.2020 JP 2020163987
(43) Date of publication of application: 09.08.2023
(73) Proprietor: Denka Company Limited, Tokyo 103-8338 (JP)
(72) Inventor: NISHINO, Kohei, Tokyo 103-8338 (JP); ENDO, Masamichi, Tokyo 103-8338 (JP)
(74) Representative: Gulde & Partner
(86) International application number: PCT/JP2021/034756
(87) International publication number: WO 2022/071051

(56) References cited:
- WO-A1-2016/186133
- JP-A- 2001 055 449
- JP-A- H03 244 652
- JP-A- H1 036 614
- JP-A- H1 077 403
- JP-A- H10 101 643
- LONG YANG LIFU ET AL: "Grafted copolymerization of N-phenylmaleimide and styrene in porous polyvinyl chloride particles suspended in aqueous solution", DESIGNED MONOMERS AND POLYMERS, vol. 22, no. 1, 1 January 2019 (2019-01-01), pages 66 - 78, XP093140442, ISSN: 1568-5551, Retrieved from the Internet <URL:https://www.ncbi.nlm.nih.gov/pmc/articles/PMC6407575/pdf/tdmp-22-1581490.pdf> DOI: 10.1080/15685551.2019.1581490

## Description

### TECHNICAL FIELD

The present invention relates to a maleimide-based copolymer having superior dispersibility during melt extrusion and kneading.

### BACKGROUND

ABS resin is a thermoplastic resin which contains acrylonitrile, butadiene, and styrene as its main component. Due to its superior mechanical strength, appearance, chemical resistance, molding property and the like, ABS resin is used in a wide variety of applications including automobiles, home appliances, office automation equipment, housing materials, daily necessities and the like. On the other hand, in applications which require heat resistance such as interior material of automobiles, heat resistance may be insufficient. As a technique for improving the heat resistance, the following can be mentioned.

For example, maleimide-based copolymer, α-methyl styrene-based copolymer and the like are used JP 2003-41080 A or WO 2010/082617 A. In recent years, development in twin-screw extruders to increase torque and to deepen the groove of screw have been achieved, thereby enabling large discharge volume. In the initial stage of the melt-kneading, plasticization of the solid resin proceeds. Here, in order to allow the solid resin start to plasticize, the resin need be compressed so that the density of the resin becomes close to the true solid density. This is achieved by removing the air phase that exists in the surroundings of the solid resin. Therefore, when the powder is subjected to melt-kneading, high kneading pressure need be applied in order to increase the packing density to efficiently remove the air phase and allow plasticization to start. Examples may be found in non-patent literature by Long Yang Lifu et al. in "Grafted copolymerization of N-phenylmaleimide and styrene in porous polyvinyl chloride particles suspended in aqueous solution" (Designed Monomers and Polymers, vol. 22, no. 1, 1 January 2019) or JP 2001 055449 A.

### SUMMARY OF INVENTION

### TECHNICAL PROBLEM

The present invention provides a maleimide-based copolymer having superior dispersibility during melt extrusion and kneading.

### SOLUTION TO PROBLEM

The present disclosure relates to a maleimide-based copolymer (A) having a mass average particle diameter of 75 µm to 300 µm and a cumulative oversize at 1000 µm of lower than 5 mass%.

In a preferred embodiment, the maleimide-based copolymer (A) may have a glass transition temperature of 170 to 210 °C.

In another preferred embodiment, the maleimide-based copolymer (A) may have a melt viscosity measured at 260 °C and a shear rate of 120/sec of 1000 Pa·s or higher.

Another aspect of the present disclosure relates to a method for manufacturing a heat resistant resin composition, the method comprises: a melt-kneading step to melt and knead the maleimide-based copolymer (A) as disclosed above and at least one resin (B) selected from the group consisting of ABS resin, ASA resin, AES resin, and SAN resin using an extruder.

### EFFECT OF THE INVENTION

The maleimide-based copolymer of the present invention has superior dispersibility. Therefore, the dispersibility of maleimide-based copolymer with resin such as ABS resin becomes sufficient. Accordingly, even when manufacture of molded article is performed under a condition of large discharge volume using deep groove screw which is somewhat inferior in dispersing ability, the maleimide-based copolymer can be dispersed sufficiently, thereby allowing to obtain a molded article without defects in appearance.

### BRIEF EXPLANATION OF THE DRAWINGS

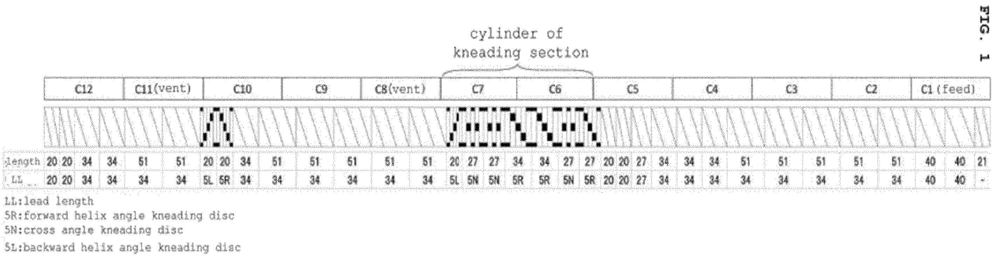

[FIG. 1] FIG. 1 is a configuration diagram of a twin-screw extruder in accordance with an embodiment of the present invention.

### EMBODIMENTS OF THE INVENTION

### <Explanation of Terms>

In the present specification, the phrase "A to B" means A or more and B or less.

Hereinafter, the embodiments of the present invention will be described in detail. The following embodiments can be combined with each other.

The maleimide-based copolymer of the present invention has a mass average particle diameter of 75 µm to 300 µm, and the cumulative oversize at 1000 µm is lower than 5 mass%.

The maleimide-based copolymer (A) is a copolymer including a maleimide-based monomer unit and a styrene-based monomer unit. In the present invention, the maleimide-based copolymer (A) can further include an acrylonitrile-based monomer unit and an unsaturated dicarboxylic anhydride-based monomer unit.

The maleimide-based monomer unit is N-alkyl maleimide such as N-methyl maleimide, N-butyl maleimide, and N-cyclohexyl maleimide; and N-phenyl maleimide, N-chlorophenyl maleimide, N-methylphenyl maleimide, N-methoxyphenyl maleimide, and N-tribromophenyl maleimide for example. Among these, N-phenyl maleimide is preferable. These maleimide-based monomer units can be used alone, or two or more of these can be used in combination. The maleimide-based monomer unit can be obtained by using a raw material comprising maleimide-based monomer. Otherwise, a raw material comprising unsaturated dicarboxylic monomer unit can be imidized using ammonia or primary amine.

The maleimide-based copolymer (A) preferably contains 40 to 70 mass% of maleimide-based monomer unit, more preferably 45 to 60 mass% of maleimide-based monomer unit with respect to 100 mass% of the maleimide-based copolymer (A). The content of the maleimide-based monomer unit is, specifically for example, 40, 41, 42, 43, 44, 45, 50, 55, 60, or 70 mass%, and can be in the range between the two values exemplified herein. When the content of the maleimide-based monomer unit is within such range, compatibility with at least one resin (B) selected from the group consisting of ABS resin, ASA resin, AES resin, and SAN resin described later is improved, and thus the impact strength of the resin composition becomes superior. The content of the maleimide-based monomer unit is a value measured by 13C-NMR.

The styrene-based monomer unit is, for example, styrene, o-methyl styrene, m-methyl styrene, p-methyl styrene, 2,4-dimethyl styrene, ethyl styrene, p-tert-butyl styrene, α-methyl styrene, α-methyl-p-methyl styrene and the like. Among these, styrene is preferable. These styrene-based monomer units can be used alone, or two or more of these can be used in combination.

The maleimide-based copolymer (A) preferably contains 20 to 60 mass% of styrene-based monomer unit, more preferably 35 to 55 mass% of styrene-based monomer unit with respect to 100 mass% of the maleimide-based copolymer (A). The content of the styrene-based monomer unit is, specifically for example, 20, 30, 40, 45, 46, 47, 48, 49, 50, 55, or 60 mass%, and can be in the range between the two values exemplified herein. When the content of the styrene-based monomer unit is within such range, compatibility with at least one resin (B) selected from the group consisting of ABS resin, ASA resin, AES resin, and SAN resin described later is improved, and thus the impact strength of the resin composition becomes superior. The content of the styrene-based monomer unit is a value measured by 13C-NMR.

Acrylonitrile-based monomer unit is, for example, acrylonitrile, methacrylonitrile, ethacrylonitrile, and fumaronitrile. Among these, acrylonitrile is preferable. These acrylonitrile-based monomer units can be used alone, or two or more of these can be used in combination.

The maleimide-based copolymer (A) preferably contains 0 to 20 mass% of acrylonitrile-based monomer unit, more preferably 0 to 15 mass% of acrylonitrile-based monomer unit with respect to 100 mass% of the maleimide-based copolymer (A). The content of the acrylonitrile-based monomer unit is, specifically for example, 0, 5, 6, 7, 8, 9, 10, 15, or 20 mass%, and can be in the range between the two values exemplified herein. When the content of the acrylonitrile-based monomer unit is within such range, the chemical resistance of the resin composition becomes superior. The content of the acrylonitrile-based monomer unit is a value measured by 13C-NMR.

Unsaturated dicarboxylic anhydride-based monomer unit is, for example, maleic anhydride, itaconic anhydride, citraconic anhydride, and aconitic anhydride. Among these, maleic anhydride is preferable. These unsaturated dicarboxylic anhydride-based monomer units can be used alone, or two or more of these can be used in combination.

The maleimide-based copolymer (A) preferably contains 0 to 10 mass% of unsaturated dicarboxylic anhydride-based monomer unit, more preferably 0 to 5 mass% of unsaturated dicarboxylic anhydride-based monomer unit with respect to 100 mass% of the maleimide-based copolymer (A). The content of the unsaturated dicarboxylic anhydride-based monomer unit is, specifically for example, 0, 1, 2, 3, 4, 5, 6, 7, 8, 9, or 10 mass%, and can be in the range between the two values exemplified herein. When the content of the unsaturated dicarboxylic anhydride-based monomer unit is within such range, the thermal stability of the maleimide-based copolymer becomes superior. The content of the unsaturated dicarboxylic anhydride-based monomer unit is a value measured by titration method.

The maleimide-based copolymer (A) according to one embodiment of the present invention preferably contains 40 to 70 mass% of maleimide-based monomer unit, 20 to 60 mass% of styrene-based monomer unit, 0 to 20 mass% of acrylonitrile-based monomer unit, and 0 to 10 mass% of unsaturated dicarboxylic anhydride-based monomer unit with respect to 100 mass% of the maleimide-based copolymer (A). More preferably, the maleimide-based copolymer (A) according to one embodiment of the present invention contains 45 to 60 mass% of maleimide-based monomer unit, 35 to 55 mass% of styrene-based monomer unit, 0 to 15 mass% of acrylonitrile-based monomer unit, and 0 to 5 mass% of unsaturated dicarboxylic anhydride-based monomer unit with respect to 100 mass% of the maleimide-based copolymer (A). When the content of the constituting unit is within such range, flowability, heat resistance, and thermal stability of the maleimide-based copolymer (A) becomes superior.

In terms of efficiently improving the heat resistance of at least one resin (B) selected from the group consisting of ABS resin, ASA resin, AES resin, and SAN resin described later, the glass transition temperature (Tmg) of the maleimide-based copolymer (A) is preferably 170 °C to 210 °C, more preferably 185 °C to 205 °C. The glass transition temperature is a value measured by DSC under the following measurement conditions.
Name of instrument: Robot DSC 6200 available from Seiko Instruments Inc.
Temperature elevation rate: 10 °C/min

The weight average molecular weight (Mw) of the maleimide-based copolymer (A) is preferably 60,000 to 150,000, more preferably 70,000 to 140,000. The weight average molecular weight is, specifically for example, 60,000, 70,000, 80,000, 90,000, 100,000, 110,000, 120,000, 130,000, 140,000, or 150,000, and can be in the range between the two values exemplified herein. When the weight average molecular weight (Mw) of the maleimide-based copolymer (A) is within such range, the balance between the flowability and impact strength of the resin composition obtained by melt-kneading with the resin (B) described later becomes superior. In order to control the weight average molecular weight (Mw) of the maleimide-based copolymer (A), polymerization temperature, polymerization time, and amount of polymerization initiator added can be adjusted. In addition, concentration of solvent and amount of chain transfer agent added can also be adjusted. The weight average molecular weight of the maleimide-based copolymer (A) is a value of polystyrene equivalent measured by gel permeation chromatography (GPC), which is measured under following conditions.
Name of Instrument: SYSTEM-21 Shodex (available from Showa Denko K.K.)
Column: PL gel MIXED-B, 3 columns connected in series
Temperature: 40 °C
Detection: differential refractive index
Eluent: tetrahydrofuran
Concentration: 2 mass%
Calibration Curve: standard polystyrene (PS) (available from Polymer Laboratories Ltd) was used for preparation

As the manufacturing method of the maleimide-based copolymer (A), known methods can be adopted. For example, a method in which a monomer mixture comprising styrene-based monomer, maleimide-based monomer, unsaturated dicarboxylic anhydride-based monomer, and other copolymerizable monomer is copolymerized can be mentioned. There is also a method in which a monomer mixture comprising styrene-based monomer, unsaturated dicarboxylic anhydride-based monomer, and other copolymerizable monomer is copolymerized, followed by imidization to allow a part of the unsaturated dicarboxylic anhydride-based monomer unit react with ammonia or primary amine to convert the part of the unsaturated dicarboxylic anhydride-based monomer unit into a maleimide-based monomer unit (hereinafter referred to as "post-imidizing method").

The polymerization method of the maleimide-based copolymer (A) includes, for example, solution polymerization and bulk polymerization. Solution polymerization is preferable from the viewpoint that a maleimide-based copolymer (A) with a more uniform copolymerization composition can be obtained by polymerizing while adding the monomer to be copolymerized divisionally for example. The solvent for solution polymerization is preferably non-polymerizable from the viewpoint that formation of byproduct and adverse effect can be suppressed. For example, ketone such as acetone, methyl ethyl ketone, methyl isobutyl ketone, acetophenone and the like; ether such as tetrahydrofuran, 1,4-dioxiane and the like; aromatic hydrocarbon such as benzene, toluene, xylene, chlorobenzene and the like; N,N-dimethylformamide; dimethyl sulfoxide; N-methyl-2-pyrrolidone and the like can be mentioned. In terms of easily removing solvent during devolatilization and recovery of the maleimide-based copolymer (A), methyl ethyl ketone and methyl isobutyl ketone are preferable. Polymerization process of any one of continuous polymerization process, batch process (batch), and semi-batch process can be applied. The polymerization method is not particularly limited. Here, radical polymerization is preferable since high productivity can be achieved with simple process.

In the solution polymerization or the bulk polymerization, polymerization initiator and chain transfer agent can be used, and the polymerization temperature is preferably in the range of 80 to 150 °C. The polymerization initiator is azo compound such as azobisisobutyronitrile, azobiscyclohexanecarbonitrile, azobismethylpropionitrile, and azobismethylbutyronitrile; and peroxide such as benzoyl peroxide, t-butyl peroxybenzoate, 1,1-di-(t-butyl peroxy)cyclohexane, t-butyl peroxy isopropyl monocarbonate, t-butyl peroxy-2-ethylhexanoate, di-t-butyl peroxide, dicumylperoxide, and ethyl-3,3-di-(t-butylperoxy)butyrate. These polymerization initiators can be used alone, or two or more of these can be used in combination. From the viewpoint of the polymerization reaction rate and controlling of the rate of conversion, azo compounds and organic peroxides having a 10 hour half-life of 70 to 120 °C are preferable. The amount of the polymerization initiator used is not particularly limited. Here, the amount is preferably 0.1 to 1.5 mass% with respect to 100 mass% of the total monomer unit, more preferably 0.1 to 1.0 mass%. When the amount of the polymerization initiator used is 0.1 mass% or more, it is preferable since sufficient polymerization reaction rate can be achieved. When the amount of the polymerization initiator used is less than 1.5 mass%, the polymerization reaction rate can be suppressed, thereby allowing easy control of the reaction, resulting in obtaining the target molecular weight easily. The chain transfer agent is n-octyl mercaptan, n-dodecyl mercaptan, t-dodecyl mercaptan, α-methyl styrene dimer, ethyl thioglycolate, limonene, and terpinolene for example. The amount of the chain transfer agent used is not particularly limited, so long as it is in the range which allows to obtain the target molecular weight. Here, the amount of the chain transfer agent used is preferably 0.1 to 0.8 mass% with respect to 100 mass% of the total monomer unit, more preferably 0.15 to 0.5 mass%. When the amount of the chain transfer agent used is 0.1 to 0.8 mass%, the target molecular weight can be obtained easily.

As a method for introducing the maleimide-based monomer unit of the maleimide-based copolymer (A), a method in which the maleimide-based monomer is copolymerized and a post-imidizing method can be mentioned. Post-imidizing method is preferable since the amount of residual maleimide-based monomer in the maleimide-based copolymer (A) becomes less. The post-imidizing method is a method in which a monomer mixture comprising styrene-based monomer, unsaturated dicarboxylic anhydride-based monomer, and other copolymerizable monomer is copolymerized, followed by imidization to allow a part of the unsaturated dicarboxylic anhydride-based monomer unit react with ammonia or primary amine to convert the part of the unsaturated dicarboxylic anhydride-based monomer unit into a maleimide-based monomer unit. As the primary amine used in the post-imidizing method, for example, alkyl amine such as methylamine, ethylamine, n-propylamine, iso-propylamine, n-butylamine, n-pentylamine, n-hexylamine, n-octylamine, cyclohexylamine, and decylamine; chloro- or bromo- substituted alkyl amine; and aromatic amine such as aniline, toluidine, naphthylamine and the like can be mentioned. Among these, aniline is preferable. These primary amines can be used alone, or two or more of these can be used in combination. In the post-imidizing, a catalyst can be used to enhance the dehydration-ring-closing reaction during the reaction between the primary amine and the unsaturated dicarboxylic anhydride group. The catalyst is, for example, tertiary amine such as trimethylamine, triethylamine, tripropylamine, tributylamine, N,N-dimethylaniline, and N,N-diethylaniline. The temperature of the post-imidizing is preferably 100 to 250 °C, more preferably 120 to 200 °C. When the temperature of the imidizing reaction is 100 °C or higher, the reaction rate is sufficiently fast. Therefore, it is preferable in view of productivity. When the temperature of the imidizing reaction is 250 °C or lower, it is preferable since deterioration of the physical property due to thermal degradation of the maleimide-based copolymer (A) can be suppressed.

As the method for removing volatile component (devolatilization method) such as solvent used in the solution polymerization and unreacted monomer from the solution after the solution polymerization or from the solution after the post-imidizing of the maleimide-based copolymer (A), known method can be applied. For example, a vacuum devolatilization tank equipped with a heater and a devolatilization extruder equipped with a vent can be used. The molten maleimide-based copolymer (A) after devolatilization is transferred to the pelletizing step. The molten copolymer is extruded into strands from a porous die, and processed into pellets by cold cut method, air-cooled hot cutting method or underwater hot cutting method.

The pelletized maleimide-based copolymer (A) can be processed into powder by using known pulverizer. As the pulverizer, for example, screen micro pulverizer and impact micro pulverizer can be mentioned.

The maleimide-based copolymer (A) in the form of powder has an average particle diameter (by mass) of 75 µm to 300 µm, preferably 80 to 300 µm, more preferably 100 to 250 µm. The mass average particle diameter is, specifically for example, 75, 80, 95, 100, 110, 120, 130, 140, 150, 160, 170, 180, 190, 200, 210, 220, 230, 240, 250, 260, 270, 280, 290, or 300 µm, and can be in the range between the two values exemplified herein. When the maleimide-based copolymer (A) is in the form of powder, the dispersibility during melt extrusion and kneading is greatly improved. However, when the average particle diameter is smaller than 75 µm, material may get clogged at the supply zone of the extruder when the material is supplied from the hopper. Further, risk of dust explosion may increase. The average particle diameter of the powder can be measured using test sieves as specified in JIS Z 8801. The cumulative distribution oversize can be calculated as follows. Sieves having aperture size of 1000, 850, 500, 355, 250, 150, 106, 75, and 50 µm are used. Antistatic agent is sprayed to 50 g of powdered maleimide-based copolymer and blended. The powder is then placed in the sieve having the largest aperture size. The sieve is then closed and set on a shaker. After 20 minutes of shaking, mass of each sieves containing the powder is measured and the mass of the sieve is subtracted therefrom. Using the results of distribution measurement, the mass is added from the mass of powder contained in the sieve with larger aperture. A line is drawn by connecting the two points of aperture size (particle diameter) sandwiching the cumulative mass of 50%. The particle diameter which corresponds to the particle size at cumulative 50% in the line thus obtained was taken as the average particle diameter. The average particle diameter can be controlled, for example, by adjusting the diameter of the screen or adjusting the number of rotation when the screen micro pulverizer is used.

The powdered maleimide-based copolymer (A) has a cumulative oversize at 1000 µm of lower than 5 mass%, preferably lower than 3 mass%. In the present invention, the "oversize" used in the stipulation of the amount of particles of the maleimide-based copolymer represents the percentage of the amount of particles having a particle size of a particular size or larger with respect to the entire maleimide-based copolymer in terms of cumulative distribution. In addition, the "undersize" used in the stipulation of the amount of particles of the maleimide-based copolymer represents the percentage of the amount of particles having a particle size of a particular size or smaller with respect to the entire maleimide-based copolymer in terms of cumulative distribution. The cumulative oversize at 1000 µm is, specifically for example, lower than 5, 4, 3, 2, or 1 mass%, and can be in the range between the two values exemplified herein. When the cumulative oversize at 1000 µm exceeds 5 mass%, dispersibility during melt extrusion and kneading deteriorates even when the maleimide-based copolymer is in the form of powder. The amount of cumulative oversize at 1000 µm can be controlled by adjusting pulverizing conditions and classification procedure after pulverization. In addition, total cumulative amount from oversize at 75 µm to undersize at 850 µm is preferably 60 to 90 mass%, more preferably 65 to 90 mass%. The total cumulative amount from oversize at 75 µm to undersize at 850 µm is, specifically for example, 60, 65, 70, 75, 80, 85, or 90 mass%, and can be in the range between the two values exemplified herein.

In terms of providing heat resistance to resin (B), there is a case where a maleimide-based copolymer (A) containing a large amount of maleimide-based monomer unit is used. In such case, increase in the content of maleimide-based monomer unit can result in increase of the melt viscosity of the maleimide-based copolymer (A), thereby causing problems in dispersibility when melt-kneading with resin (B) is performed. When the maleimide-based copolymer (A) of the present invention is used, dispersibility when melt-kneading with resin (B) is performed is superior even when a maleimide-based copolymer (A) containing a large amount of maleimide-based monomer unit is used in terms of providing heat resistance to resin (B).

When a maleimide-based copolymer (A) containing a large amount of maleimide-based monomer unit is used in terms of providing heat resistance to resin (B), the melt viscosity of the maleimide-based copolymer (A) at 260 °C and a shear rate of 120/sec is preferably 1000 Pa·s or higher. More preferably, the melt viscosity at 260 °C and a shear rate of 120/sec is 1000 Pa·s or higher and the melt viscosity at 280 °C and a shear rate of 120/sec is 500 Pa·s or higher. The higher the melt viscosity of the maleimide-based copolymer (A), the more inferior the dispersibility when melt extrusion and kneading is performed. However, the effect of improving the dispersibility by allowing the maleimide-based copolymer (A) to have a powder form increases. In addition, in terms of dispersibility, the melt viscosity of the maleimide-based copolymer (A) at 280 °C and a shear rate of 120/sec is preferably 3000 Pa·s or lower, more preferably 2000 Pa·s or lower. The melt viscosity is a value measured using a capillary rheometer with a capillary die of L=40 mm and D=1 mm.

The resin (B) is selected from the group consisting of ABS resin, ASA resin, AES resin, and SAN resin. Such resins can be used alone, or two or more of these can be used in combination.

ABS resin, ASA resin, and AES resin are graft copolymers obtained by graft copolymerizing at least a styrene-based monomer and an acrylonitrile-based monomer to a rubbery polymer. For example, when butadiene-based rubber such as polybutadiene, styrene-butadiene copolymer is used as the rubbery polymer, the resin is ABS resin. When acryl-based rubber comprising butyl acrylate or ethyl acrylate is used as the rubbery polymer, the resin is ASA resin. When ethylene-based rubber such as ethylene-α-olefin copolymer is used as the rubbery polymer, the resin is AES resin. Two or more of these rubbery polymers can be used when graft copolymerization is performed.

As the manufacturing method of the graft copolymer such as ABS resin and the like, known methods can be adopted. For example, a manufacturing method performing emulsion polymerization or continuous bulk polymerization can be mentioned. The method which performs the emulsion polymerization is preferable since the content of the rubbery polymer in the final resin composition can be adjusted easily.

As the manufacturing method of the graft copolymer which performs emulsion polymerization, a method in which a styrene-based monomer and an acrylonitrile-based monomer are emulsion-graft polymerized to a latex of rubbery polymer can be mentioned (hereinafter referred to as "emulsion-graft polymerization method"). A latex of graft copolymer can be obtained by the emulsion-graft polymerization method.

In the emulsion-graft polymerization method, water, emulsifier, polymerization initiator, and chain transfer agent are used, and the polymerization temperature is preferably in the range of 30 to 90 °C. Examples of the emulsifier include anionic surfactant, nonionic surfactant, and amphoteric surfactant. Examples of the polymerization initiator include organic peroxides such as cumene hydroperoxide, diisopropylbenzene peroxide, t-butyl peroxyacetate, t-hexyl peroxybenzoate, t-butyl peroxybenzoate; persulfates such as potassium persulfate and ammonium persulfate; azo-based compounds such as azobisbutyronitrile; reducing agents such as iron ion; secondary reducing agents such as sodium formaldehyde sulfoxylate; and chelating agents such as ethylenediaminetetraacetic acid disodium. Examples of the chain transfer agent include n-octyl mercaptan, n-dodecyl mercaptan, t-dodecyl mercaptan, α-methyl styrene dimer, ethyl thioglycolate, limonene, and terpinolene.

The latex of the graft copolymer can be solidified by a known method to collect the graft copolymer. For example, a coagulant is added to the latex of the graft copolymer to allow solidification, and then the graft copolymer is washed and dehydrated in a dehydrator followed by a drying step. Accordingly, a powdered graft copolymer is obtained.

In terms of impact-resistance, the content of the rubbery polymer in the graft copolymer obtained by the emulsion-graft polymerization method is preferably 40 to 70 mass%, more preferably 45 to 65 mass%. The content of the rubbery polymer can be adjusted by, for example, the ratio of the styrene-based monomer and the acrylonitrile-based monomer used with respect to the rubbery polymer when performing the emulsion-graft polymerization.

In terms of impact-resistance and chemical resistance, the constituting unit other than the rubbery polymer of the graft copolymer obtained by the emulsion-graft polymerization method are preferably 65 to 85 mass% of the styrene-based monomer unit and 15 to 35 mass% of the acrylonitrile-based monomer unit.

The gel component of the graft copolymer is preferably in the form of particles. The gel component is a particle of a rubbery polymer obtained by graft copolymerizing a styrene-based monomer and an acrylonitrile-based monomer. The gel component is a component which is insoluble in organic solvent such as methyl ethyl ketone and toluene, and can be separated by centrifugal separation. In some cases, an occlusion structure is formed, in which the styrene-acrylonitrile copolymer is encapsulated as particles inside the rubbery polymer particles. When the graft copolymer and the styrene-acrylonitrile copolymer are melt blended, the gel component exists as a dispersed phase in the form of particles in the continuous phase of the styrene-acrylonitrile copolymer. The gel content is a value calculated as follows. The graft copolymer of mass W is dissolved in methyl ethylene ketone, and then the solution is centrifuged at 20,000 rpm using a centrifuge to precipitate the insoluble matter. Subsequently, the supernatant liquid is removed by decantation to obtain the insoluble matter. From the mass S of dried insoluble matter after vacuum drying, the gel content (mass%) = (S/W) × 100 is calculated. In a similar manner, gel content can be calculated by dissolving the resin composition in methyl ethyl ketone followed by centrifugal separation, the ABS resin composition obtained by melt blending the graft copolymer and the styrene-acrylonitrile copolymer.

In terms of the impact resistance and the appearance of the molded article, the volume average particle diameter of the gel component of the graft copolymer is preferably in the range of 0.10 to 1.0 µm, more preferably 0.15 to 0.50 µm. The volume average particle diameter is a value calculated as follows. Ultra thin sections are cut out from the pellets of the resin composition obtained by melt blending the graft copolymer and the styrene-acrylonitrile copolymer, and the cut out sections were observed with a transmission electron microscope (TEM). Image analysis of particles dispersed in the continuous phase was performed and calculation was conducted to obtain the volume average particle diameter. The volume average particle diameter can be adjusted by the particle diameter of the latex of the rubbery polymer used in the emulsion-graft polymerization for example. The particle diameter of the latex of the rubbery polymer can be adjusted by the addition method of the emulsifier and the amount of water used in the emulsion polymerization. The conditions to achieve the preferable range would result in long polymerization time and thus the productivity becomes low. Therefore, a method in which a rubbery polymer having a particle diameter of approximately 0.1 µm is polymerized in a short period of time and then the rubber particles are enlarged by chemical aggregation method or physical aggregation method can be mentioned.

The graft ratio of the graft copolymer is preferably 10 to 100 mass%, more preferably 20 to 70 mass% in terms of impact resistance. The graft ratio is a value calculated from the equation of "graft ratio (mass%) = [(G - RC)/RC] × 100" based on the gel content (G) and the content of the rubbery polymer (RC). The graft ratio represents the content of the styrene-acrylonitrile copolymer contained in per unit mass of the rubbery polymer either by graft-bonding or by encapsulation. The graft ratio can be adjusted by, for example, the ratio of the monomer and the rubbery polymer, kind and amount of the initiator, amount of the chain transfer agent, amount of emulsifier, polymerization temperature, feeding method (lump / multistage / continuous), addition rate of monomer and the like during the emulsion-graft polymerization.

The degree of toluene swelling of the graft copolymer is preferably 5 to 20 times from the viewpoint of impact resistance and appearance of the molded article. The degree of toluene swelling represents the degree of crosslinking of the particles of the rubbery polymer, and is calculated as follows. The graft copolymer is dissolved in toluene, insoluble matter is separated by centrifugation or filtration, and the value of the degree of toluene swelling is calculated from the ratio of the mass in a state of being swollen with toluene and the mass in a dry state where toluene is removed by vacuum drying. The degree of toluene swelling is, for example, influenced by the degree of crosslinking of the rubbery polymer used in the emulsion graft polymerization, and can be adjusted by initiator, emulsifier, polymerization temperature, addition of polyfunctional monomer such as divinylbenzene and the like during the emulsion polymerization of the rubbery polymer.

SAN resin is a copolymer including a styrene-based monomer unit and an acrylonitrile-based monomer unit, such as styrene-acrylonitrile copolymer.

As the other copolymerizable monomers of the SAN resin, (meth)acrylic acid ester-based monomers such as methyl methacrylate; acrylic ester-based monomers such as butyl acrylate and ethyl acrylate; (meth)acrylic acid-based monomers such as methacrylic acid; acrylic acid-based monomers such as acrylic acid; N-substituted maleimide-based monomers such as N-phenyl maleimide can be used.

The constituting unit of the SAN resin is preferably 60 to 90 mass% of styrene-based monomer unit and 10 to 40 mass% of vinyl cyanide monomer unit, more preferably 65 to 80 mass% of styrene-based monomer unit and 20 to 35 mass% of vinyl cyanide monomer unit. When the constituting unit is within the above range, the balance between impact strength and flowability of the obtained resin composition is superior. The content of the styrene-based monomer unit and vinyl cyanide monomer unit are values measured by 13C-NMR.

As a manufacturing method of the SAN resin, known method can be adopted. For example, SAN resin can be manufactured by bulk polymerization, solution polymerization, suspension polymerization, emulsion polymerization and the like. The reaction apparatus can be operated by any of the continuous operation, batch operation, and semi-batch operation. In terms of quality and productivity, bulk polymerization and solution polymerization are preferable, and continuous operation is preferable. Examples of the solvents which can be used in bulk polymerization and solution polymerization include alkylbenzenes such as benzene, toluene, ethylbenzene and xylene; ketones such as acetone and methyl ethyl ketone; and aliphatic hydrocarbons such as hexane and cyclohexane.

In the bulk polymerization and solution polymerization of SAN resin, a polymerization initiator and a chain transfer agent can be used, and the polymerization temperature is preferably in the range of 120 to 170 °C. Examples of the polymerization initiator include peroxy ketals such as 1,1-di (t-butylperoxy) cyclohexane, 2,2-di (t-butylperoxy) butane, 2,2-di (4,4-di-t-butylperoxycyclohexyl) propane, and 1,1-di (t-amylperoxy) cyclohexane; hydroperoxides such as cumene hydroperoxide and t-butyl hydroperoxide; alkyl peroxides such as t-butyl peroxyacetate and t-amyl peroxy isononanoate; dialkyl peroxides such as t-butyl cumyl peroxide, di-t-butyl peroxide, dicumyl peroxide, and di-t-hexyl peroxide; peroxyesters such as t-butyl peroxyacetate, t-butyl peroxybenzoate and t-butylperoxy isopropyl monocarbonate; peroxy carbonates such as t-butyl peroxy isopropyl carbonate and polyether tetrakis (t-butyl peroxy carbonate); N,N'-azobis (cyclohexane-1-carbonitrile); N,N'-azobis (2-methylbutyronitrile); N,N'-azobis (2,4-dimethylvaleronitrile); and N,N'-azobis [2-(hydroxymethyl) propionitrile]. These polymerization initiators can be used alone or two or more of these can be used in combination. Examples of the chain transfer agent include n-octyl mercaptan, n-dodecyl mercaptan, t-dodecyl mercaptan, α-methyl styrene dimer, ethyl thioglycolate, limonene, terpinolene and the like.

As the method for removing volatile component such as unreacted monomer and solvent used in the solution polymerization from the solution after polymerization of SAN resin, known method can be applied. For example, a vacuum devolatilization tank equipped with a pre-heater and a devolatilization extruder equipped with a vent can be used. The molten SAN resin after devolatilization is transferred to the pelletizing step. The molten copolymer is extruded into strands from a porous die, and processed into pellets by cold cut method, air-cooled hot cutting method or underwater hot cutting method.

In terms of the impact resistance and the molding property of the resin composition obtained, the weight average molecular weight of the SAN resin is preferably 50,000 to 250,000, more preferably 70,000 to 200,000. The weight average molecular weight is, specifically for example, 50,000, 60,000, 70,000, 80,000, 90,000, 100,000, 110,000, 120,000, 130,000, 140,000, 150,000, 160,000, 170,000, 180,000, 190,000, or 200,000, and can be in the range between the two values exemplified herein. The weight average molecular weight of the SAN resin is a value of polystyrene equivalent measured in THF solvent by gel permeation chromatography (GPC). Measurement is performed in a similar manner as the maleimide-based copolymer (A). The weight average molecular weight can be adjusted by the kind and amount of the chain transfer agent, solvent concentration, polymerization temperature, kind and amount of polymerization initiator and the like when polymerization is performed.

The resin (B) can be prepared, for example, by using a powdered ABS resin obtained by emulsion polymerization method and a pelletized SAN resin obtained by continuous bulk polymerization method. In addition, the resin (B) can be prepared by first melt blending, in an extruder or the like, a powdered ABS resin obtained by emulsion polymerization method and a pelletized SAN resin obtained by continuous bulk polymerization method, thereby obtaining the resin (B) as a pelletized ABS resin.

As a method for performing melt-kneading of the maleimide-based copolymer (A) and at least one resin (B) selected from the group consisting of ABS resin, ASA resin, AES resin, and SAN resin using an extruder, a known method can be adopted. As the extruder, known devices such as twin-screw extruder, single-screw extruder, multi-screw extruder, and continuous kneader with biaxial rotor can be mentioned. The twin-screw extruder is preferably used. In general, intermeshing co-rotating twin-screw extruder is widely used and is further preferable.

As the screw of the twin-screw extruder according to an embodiment of the present invention, a screw having a large deep groove ratio is preferably used. The deep groove ratio of the screw is stipulated as the ratio D/d, in which "D" represents the outer diameter of the screw and "d" represents the root diameter. The deep groove ratio of the screw can be uniform throughout the entire screw, or can differ among the sections. The deep groove ratio of the screw of the kneading unit of the present invention is the deep groove ratio of the screw at the section having the highest temperature among the sections where the materials are melt-kneaded and having the mixing element arranged therein. In the embodiment of the present invention, in terms of productivity, the deep groove ratio of the screw of the kneading unit of the twin-screw extruder is preferably 1.55 or higher.

The melt-kneading is preferably carried out in the presence of an antioxidant (C). As the antioxidant, hindered phenol-based antioxidant is preferable, and phosphorus-based antioxidant can be used in combination.

The hindered phenol-based antioxidant is an antioxidant having a phenolic hydroxyl group within its basic skeleton. As the hindered phenol-based antioxidant, for example, octadecyl-3-(3,5-di-t-butyl-4-hydroxyphenyl) propionate, ethylene bis(oxyethylene) bis[3-(5-tert-butyl-4-hydroxy-m-tolyl) propionate], 3,9-bis[2-{3-(3-tert-butyl-4-hydroxy-5-methylphenyl)propionyloxy}-1,1-dimethylethyl]-2,4,8,10-tetraoxaspiro[5.5]undecane, pentaerythritol tetrakis[3-(3,5-di-tert-butyl-4-hydroxyphenyl)propionate], 4,6-bis(octylthiomethyl)-o-cresol, 4,6-bis[(dodecylthio)methyl]-o-cresol, 2,4-dimethyl-6-(1-methylpentadecyl)phenol, tetrakis[methylene-3-(3,5-di-t-butyl-4-hydroxyphenyl)propionate]methane, 4,4'-thiobis(6-t-butyl-3-methylphenol), 1,1,3-tris(2-methyl-4-hydroxy-5-t-butylphenyl)butane, 4,4'-butylidenebis(3-methyl-6-t-butylphenol), bis-[3,3-bis-(4'-hydroxy-3'-tert-butylphenyl)-butanoic acid]-glycol ester, 2-t-butyl-6-(3-t-butyl-2-hydroxy-5-methylbenzyl)-4-methylphenyl acrylate, and 2-[1-(2-hydroxy-3,5-di-t-pentylphenyl)ethyl]-4,6-di-t-pentylphenyl acrylate can be mentioned. Preferably, as the hindered phenol-based antioxidant, octadecyl-3-(3,5-di-t-butyl-4-hydroxyphenyl) propionate, ethylene bis(oxyethylene) bis[3-(5-tert-butyl-4-hydroxy-m-tolyl) propionate], and pentaerythritol tetrakis[3-(3,5-di-tert-butyl-4-hydroxyphenyl)propionate] can be mentioned. Further preferably, as the hindered phenol-based antioxidant, octadecyl-3-(3,5-di-t-butyl-4-hydroxyphenyl) propionate can be mentioned. These hindered phenol-based antioxidants can be used alone, or two or more of these can be used in combination.

The phosphorus-based antioxidant is a phosphorous acid ester which is a trivalent phosphorus compound. As the phosphorus-based antioxidant, for example, 6-[3-(3-t-butyl-4-hydroxy-5-methylphenyl)propoxy]-2,4,8,10-tetra-t-butylbenz[d,f][1,3,2]dioxaphosphepine, 3,9-bis(2,6-di-tert-butyl-4-methylphenoxy)-2,4,8,10-tetraoxa-3,9-diphosphaspiro[5.5]undecane, bis(2,4-dicumylphenyl)pentaerythritol diphosphate, 2,2'-methylene bis(4,6-di-tert-butyl-1-phenyloxy)(2-ethylhexyloxy)phosphorus, tris(2,4-di-tert-butylphenyl) phosphite, phosphorous acid bis[2,4-bis(1,1-dimethylethyl)-6-methylphenyl] ethyl ester, bis(2,4-di-tert-butylphenyl)pentaerythritol diphosphate, cyclic neopentane tetrayl bis(octadecylphosphite), bis(nonylphenyl)pentaerythritol diphosphate, 4,4'-biphenylenediphosphinic acid tetrakis(2,4-di-tert-butylphenyl), 9,10-dihydro-9-oxa-10-phosphaphenanthrene-10-oxide, and tetrakis(2,4-di-tert-butyl-5-methylphenyl)-4,4'-biphenylene diphosphonate can be mentioned. Preferably, as the phosphorus-based antioxidant, for example, 6-[3-(3-t-butyl-4-hydroxy-5-methylphenyl)propoxy]-2,4,8,10-tetra-t-butylbenz[d,f][1,3,2]dioxaphosphepine, 3,9-bis(2,6-di-tert-butyl-4-methylphenoxy)-2,4,8,10-tetraoxa-3,9-diphosphaspiro[5.5]undecane, bis(2,4-dicumylphenyl)pentaerythritol diphosphate, 2,2'-methylene bis(4,6-di-tert-butyl-1-phenyloxy)(2-ethylhexyloxy)phosphorus, tris(2,4-di-tert-butylphenyl) phosphite, and bis(2,4-di-tert-butylphenyl)pentaerythritol diphosphate can be mentioned. More preferably, as the phosphorus-based antioxidant, for example, 6-[3-(3-t-butyl-4-hydroxy-5-methylphenyl)propoxy]-2,4,8,10-tetra-t-butylbenz[d,f][1,3,2]dioxaphosphepine, bis(2,4-dicumylphenyl)pentaerythritol diphosphate, tris(2,4-di-tert-butylphenyl) phosphite, and bis(2,4-di-tert-butylphenyl)pentaerythritol diphosphate can be mentioned. Further preferably, as the phosphorus-based antioxidant, for example, 6-[3-(3-t-butyl-4-hydroxy-5-methylphenyl)propoxy]-2,4,8,10-tetra-t-butylbenz[d,f][1,3,2]dioxaphosphepine, bis(2,4-dicumylphenyl)pentaerythritol diphosphate, and bis(2,4-di-tert-butylphenyl)pentaerythritol diphosphate can be mentioned. These phosphorus-based antioxidants can be used alone, or two or more of these can be used in combination.

When the cylinder temperature of the kneading unit is 290 °C or higher, it is preferable to further use a radical scavenger as the antioxidant (C). As the radical scavenger, 2-t-butyl-6-(3'-t-butyl-5'-methyl-2'-hydroxybenzyl)-4-methylphenyl acrylate and 2,4-di-t-amyl 6-[1-(3,5-di-t-amyl-2-hydroxyphenyl)ethyl] phenyl acrylate can be mentioned.

The addition amount of the antioxidant (C) is preferably 0.1 to 0.5 parts by mass, more preferably 0.3 to 0.5 parts by mass with respect to 100 parts by mass of the total sum of the maleimide-based copolymer (A) and the resin (B). The addition amount of the antioxidant (C) is, specifically for example, 0.1, 0.2, 0.3, 0.4, or 0.5 parts by mass, and can be in the range between the two values exemplified herein.

The content of the maleimide-based copolymer (A) in the resin composition is preferably 5 to 45 mass%, more preferably 7 to 35 mass%, and further preferably 10 to 30 mass% when the total content of the maleimide-based copolymer (A) and the resin (B) is taken as 100 mass%. The content of the maleimide-based copolymer (A) in the resin composition is, specifically for example, 5, 10, 15, 20, 21, 22, 23, 24, 25, 26, 27, 28, 29, 30, 35, 40, or 45 mass%, and can be in the range between the two values exemplified herein. When the content of the maleimide-based copolymer (A) is too small, the heat resistance of the resin composition may not be improved sufficiently. On the other hand, when the content of the maleimide-based copolymer (A) is too large, the flowability decreases, and the molding property may deteriorate. Here, the resin contained in the resin composition can consist essentially of the maleimide-based copolymer (A) and the resin (B).

During the manufacture of the heat resistant resin composition, the heat resistant resin composition can be blended with other components to an extent that it does not impair the effect of the present invention. Such components include other resin components, impact resistance modifier, flowability modifier, hardness modifier, antioxidants, inorganic fillers, matting agents, flame retardants, flame retardant aid, anti-drip agents, sliding property imparting agent, heat dissipating material, electromagnetic wave absorbing material, plasticizers, lubricants, mold release agents, ultraviolet absorbers, light stabilizers, antibacterial agents, antifungal agents, antistatic agents, carbon black, titanium oxide, pigments, dyes, and the like.

### EXAMPLE

Hereinafter, detailed explanation is provided with reference to Examples. However, the present invention is not limited to the following Examples.

### <Production Example of Maleimide-Based Copolymer (A-1)>

Maleimide-based copolymer (A-1) was manufactured in accordance with the following procedures.

To an autoclave having a capacity of about 120 liters equipped with an agitator, 62 parts by mass of styrene, 11 parts by mass of maleic anhydride, 0.2 parts by mass of 2,4-diphenyl-4-methyl-1-pentene, and 31 parts by mass of methyl ethyl ketone were charged. After replacing the gaseous phase of the system with nitrogen gas, the temperature was raised to 92 °C, and a solution prepared by dissolving 28 parts by mass of maleic anhydride and 0.19 parts by mass of t-butylperoxy-2-ethylhexanoate in 110 parts by mass of methyl ethyl ketone was added continuously over 7 hours. After addition, the temperature of the reaction mixture was raised to 120 °C, and the reaction was carried out for 30 minutes to complete polymerization. Thereafter, 35 parts by mass of aniline and 0.6 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer (A-1) of approximately 3 mm size. A-1 contained 48 mass% of styrene unit, 51 mass% of N-phenyl maleimide unit, and 1 mass% of maleic anhydride unit. The weight average molecular weight was 130,000, and the glass transition temperature Tmg was 202 °C. The melt viscosity at 260 °C and a shear rate of 120/sec was 3420 Pa·s, and the melt viscosity at 280 °C and a shear rate of 120/sec was 1780 Pa·s.

### <Production Example of Maleimide-Based Copolymers (A-2 to A-8)>

A screen micro pulverizer was used to pulverize the maleimide-based copolymer (A-1) into powder. The screen diameter was 1 mm, and powdered maleimide-based copolymers A-2 to A-5 having different average particle diameter were obtained by adjusting the rotation number (Examples A-1, A-5, A-7 and A-8 are not falling under the protection scope of the present invention). A-6 was obtained by removing the cumulative oversize at 850 µm from A-4. A-7 was obtained as the cumulative undersize at 75 µm. A-8 was obtained by blending 80 mass% of A-2 and 10 mass% of cumulative oversize at 1000 µm left when A-6 was prepared. The average particle diameter of the powder was measured using test sieves as specified in JIS Z 8801. The cumulative distribution oversize was calculated as follows. Sieves having aperture size of 1000, 850, 500, 355, 250, 150, 106, 75, and 50 µm were used. Antistatic agent was sprayed to 50 g of powder maleimide-based copolymer and blended. The powder was then placed in the sieve having the largest aperture size. The sieve was then closed and set on a shaker. After 20 minutes of shaking, mass of each sieves containing the powder was measured and the mass of the sieve was subtracted therefrom. Using the results of distribution measurement, the mass was added from the mass of powder contained in the sieve with larger aperture. A line was drawn by connecting the two points of aperture size (particle diameter) sandwiching the cumulative mass of 50%. The particle diameter which corresponds to the particle size at cumulative 50% in the line thus obtained was taken as the average particle diameter. Here, with A-7, the average particle diameter cannot be measured with this method. Therefore, although described as less than 75 µm, the average particle diameter measured by laser diffraction/scattering method was 37 µm.

### <Production Example of Maleimide-Based Copolymer (A-9)>

Maleimide-based copolymer (A-9) was manufactured in accordance with the following procedures.

To an autoclave having a capacity of about 120 liters equipped with an agitator, 42 parts by mass of styrene, 10 parts by mass of acrylonitrile, 4 parts by mass of maleic anhydride, 0.03 parts by mass of 2,4-diphenyl-4-methyl-1-pentene, and 27 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 21 parts by mass of maleic anhydride and 0.15 parts by mass of t-butylperoxy-2-ethylhexanoate in 85 parts by mass of methyl ethyl ketone and 20 parts by mass of styrene were added continuously over 4.5 hours. After adding maleic anhydride, a solution prepared by dissolving 0.02 parts by mass of t-butylperoxy-2-ethylhexanoate in 9 parts by mass of methyl ethyl ketone and 3 parts by mass of styrene were added continuously over 30 minutes. After addition, the temperature of the reaction mixture was raised to 120 °C, and the reaction was carried out for 30 minutes to complete polymerization. Thereafter, 23 parts by mass of aniline and 0.4 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer (A-9). In a similar manner as (A-2) to (A-8), a screen micro pulverizer was used to pulverize maleimide-based copolymer (A-9) into powder. (A-9) contained 52 mass% of styrene unit, 8 mass% or acrylonitrile unit, 39 mass% of N-phenyl maleimide unit, and 1 mass% of maleic anhydride unit. The weight average molecular weight was 140,000, and the glass transition temperature Tmg was 177 °C. The melt viscosity at 260 °C and a shear rate of 120/sec was 1660 Pa·s, and the melt viscosity at 280 °C and a shear rate of 120/sec was 710 Pa·s.

### <ABS resin (B-1)>

Commercially available ABS resin (DENKA ABS GR-3500, available from Denka Company Limited) was used.

### <SAN resin (B-2)>

Commercially available SAN resin (DENKA AS AS-EXS, available from Denka Company Limited) was used.

### <Examples and Comparative Examples>

Maleimide-based copolymer and ABS resin were formulated by amount shown in Table 1 and were subjected to melt-kneading using an extruder under the conditions shown in Table 1, thereby obtaining a heat resistant resin composition. As the extruder, twin-screw extruder (TEM-26SX, available from TOSHIBA MACHINE CO., LTD, currently SHIBAURA MACHINE CO., LTD.) of L/D = 48 and deep groove ratio of the screw being 1.56 was used. Here, as an antioxidant, 0.3 parts by mass of (C-1) and 0.15 parts by mass of (C-2) were formulated with respect to 100 parts by mass of the sum of maleimide-based copolymer (A) and the resin (B). Results of evaluation are shown in Table 1.
(C-1) pentaerythritol tetrakis[3-(3,5-di-tert-butyl-4-hydroxyphenyl)propionate] (Irganox 1010 available from BASF Japan Ltd.)
(C-2) tris(2,4-di-tert-butylphenyl) phosphite (Irgafos 168 available from BASF Japan Ltd.)

### (melt mass flow rate)

Melt mass flow rage was measured in accordance with JIS K7210, under conditions of 220 °C and 98 N load.

### (Vicat softening temperature)

The Vicat softening temperature was measured in accordance with JIS K7206. Here, Method 50 (load: 50N, temperature elevation rate: 50 °C/hour) was used, and the test specimen having the size of 10 mm x 10 mm and 4 mm thickness was used. HDT & VSPT testing device available from Toyo Seiki Seisaku-sho, Ltd. was used as the measuring instrument.

### (Charpy impact strength)

The Charpy impact strength was measured using a notched specimen in accordance with JIS K7111-1. Edgewise was adopted as the striking direction. Here, digital impact tester available from Toyo Seiki Seisaku-sho, Ltd. was used as the measuring instrument.

### (dispersion level)

Injection molding machine (IS-50EPN, available from TOSHIBA MACHINE CO., LTD, currently SHIBAURA MACHINE CO., LTD.) was used under conditions of 220 °C cylinder temperature and 60 °C mold temperature to prepare a mirrored plate having a size of 90 mm length, 55 mm width, and 2 mm thickness. The dispersion condition of maleimide-based copolymer was observed visually and evaluated. When the dispersion condition of the maleimide-based copolymer is inferior, streaks are observed along the flow direction of the resin on the surface of the molded article.
Dispersion level 5: no defects observed, extremely superior appearance
Dispersion level 4: small streaks slightly observed
Dispersion level 3: small streaks observed
Dispersion level 2: streaks resulting in obvious appearance defect observed
Dispersion level 1: streaks resulting in obvious appearance defect observed all over the plate

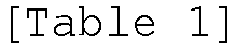

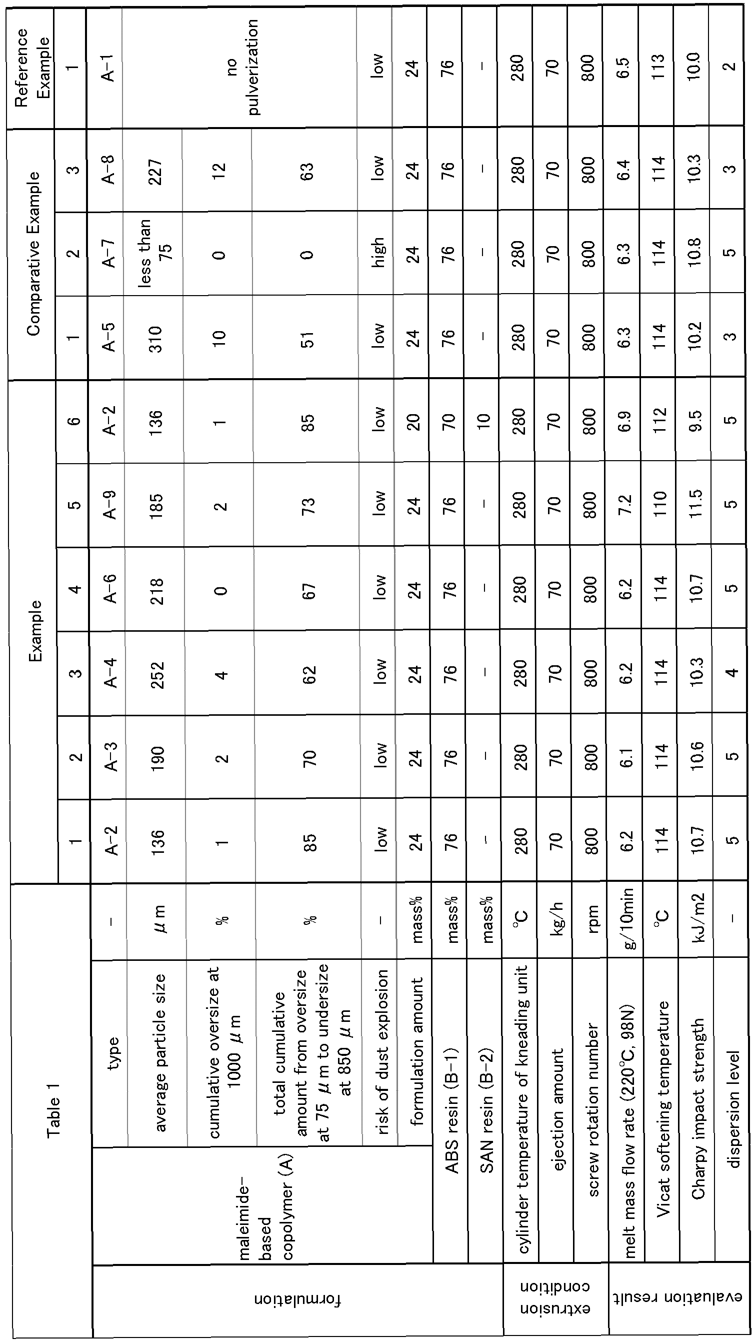

From the results shown in Table 1, by using the maleimide-based copolymer having an average particle diameter of 75 µm or larger and a cumulative oversize at 1000 µm of lower than 5 mass%, a heat resistant resin composition with superior dispersibility of maleimide-based copolymer can be manufactured.

Here, although not described in Table, 1, Comparative Example 2 was inferior in working efficiency, due to clogging of the maleimide-based copolymer at the supply zone of the extruder when the heat resistant resin composition was manufactured.

### INDUSTRIAL APPLICABILITY

With the maleimide-based copolymer of the present invention, a heat resistant resin composition with superior dispersibility of maleimide-based copolymer can be obtained with high productivity, and the molded article obtained therefrom is superior in appearance.

## Claims

1. A maleimide-based copolymer (A) having
a mass average particle diameter of 75 µm to 300 µm determined by sieving analysis using test sieves as specified in JIS Z 8801 as set forth in the description; and
a cumulative oversize at 1000 µm of lower than 5 mass% determined by sieving analysis as set forth in the description.

2. The maleimide-based copolymer (A) of Claim 1, wherein the maleimide-based copolymer (A) has a glass transition temperature of 170 to 210 °C measured by differential scanning calorimetry with a temperature elevation rate of 10 °C/min.

3. The maleimide-based copolymer (A) of Claim 1 or 2, wherein the maleimide-based copolymer (A) has a melt viscosity measured at 260 °C and a shear rate of 120/sec of 1000 Pa·s or higher determined by using a capillary rheometer with a capillary die of L=40 mm and D=1 mm.

4. A method for manufacturing a heat resistant resin composition, the method comprising:
a melt-kneading step to melt and knead the maleimide-based copolymer (A) of any one of Claims 1 to 3 and at least one resin (B) selected from the group consisting of ABS resin, ASA resin, AES resin, and SAN resin using an extruder.

## Patentansprüche

1. Copolymer (A) auf Maleimidbasis, aufweisend
einen massegemittelten Partikeldurchmesser von 75 µm bis 300 µm, bestimmt durch Siebanalyse unter Verwendung von Prüfsieben wie in JIS Z 8801 spezifiziert und in der Beschreibung dargelegt; und
ein kumulatives Übermaß bei 1000 µm von weniger als 5 Masse-%, bestimmt durch Siebanalyse wie in der Beschreibung dargelegt.

2. Copolymer (A) auf Maleimidbasis nach Anspruch 1, wobei das Copolymer (A) auf Maleimidbasis eine Glasübergangstemperatur von 170 bis 210 °C aufweist, gemessen durch dynamische Differenzkalorimetrie mit einer Temperaturerhöhungsrate von 10 °C/min.

3. Copolymer (A) auf Maleimidbasis nach Anspruch 1 oder 2, wobei das Copolymer (A) auf Maleimidbasis eine Schmelzviskosität, gemessen bei 260 °C und einer Scherrate von 120/s, von 1000 Pa·s oder höher aufweist, bestimmt unter Verwendung eines Kapillarrheometers mit einer Kapillardüse von L=40 mm und D=1 mm.

4. Verfahren zum Herstellen einer hitzebeständigen Harzzusammensetzung, wobei das Verfahren Folgendes umfasst:
einen Schmelzknetschritt zum Schmelzen und Kneten des Copolymers (A) auf Maleimidbasis nach einem der Ansprüche 1 bis 3 und mindestens eines Harzes (B), das ausgewählt ist aus der Gruppe bestehend aus ABS-Harz, ASA-Harz, AES-Harz und SAN-Harz, unter Verwendung eines Extruders.

## Revendications

1. Copolymère à base de maléimide (A) ayant
un diamètre moyen en masse des particules de 75 µm à 300 µm déterminé par une analyse de tamisage à l'aide de tamis d'essai tels que spécifiés dans la norme JIS Z 8801, comme indiqué dans la description ; et
une surépaisseur cumulée à 1000 µm inférieure à 5 mass% déterminée par analyse de tamisage comme indiqué dans la description.

2. Copolymère à base de maléimide (A) de la revendication 1, dans lequel le copolymère à base de maléimide (A) a une température de transition vitreuse de 170 à 210 °C mesurée par calorimétrie différentielle à balayage avec une vitesse d'élévation de température de 10 °C/min.

3. Copolymère à base de maléimide (A) de la revendication 1 ou 2, dans lequel le copolymère à base de maléimide (A) a une viscosité à l'état fondu mesurée à 260 °C et un taux de cisaillement de 120/sec de 1000 Pas ou plus, déterminée en utilisant un rhéomètre capillaire avec une filière capillaire de L=40 mm et D=1 mm.

4. Procédé de fabrication d'une composition de résine résistante à la chaleur, le procédé comprenant:
une étape de malaxage par fusion pour faire fondre et malaxer le copolymère à base de maléimide (A) de l'une quelconque des revendications 1 à 3 et au moins une résine (B) choisie dans le groupe constitué par la résine ABS, la résine ASA, la résine AES et la résine SAN à l'aide d'une extrudeuse.
